(19) **Europäisches Patentamt**
**European Patent Office**
**Office européen des brevets**

(11) **EP 4 635 925 A1**

(12) **EUROPÄISCHE PATENTANMELDUNG**

(43) Veröffentlichungstag:
22.10.2025 Patentblatt 2025/43

(51) Internationale Patentklassifikation (IPC):
*C04B 20/02* (2006.01) *C04B 28/02* (2006.01)

(21) Anmeldenummer: 25167320.8

(22) Anmeldetag: 31.03.2025

(52) Gemeinsame Patentklassifikation (CPC):
(C-Sets verfügbar)
**C04B 28/02; C04B 20/023** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **15.04.2024 DE 102024203479**

(71) Anmelder: **ContiTech Deutschland GmbH**
**30175 Hannover (DE)**

(72) Erfinder:
• **Dr. Sostmann, Stefan**
**30175 Hannover (DE)**
• **Wiggert, Maren**
**30175 Hannover (DE)**
• **Dr. Högermeier, Jens**
**30175 Hannover (DE)**

(74) Vertreter: **Preusser, Andrea**
**ContiTech Deutschland GmbH**
**Intellectual Property**
**Philipsbornstraße 1**
**30165 Hannover (DE)**

(54) **VERWENDUNG VON RECOVERED CARBON BLACK (RCB) FÜR LEITFÄHIGE BAUSTOFFE AUF ZEMENTBASIS**

(57) Die Erfindung betrifft ein Bauteil aus einem Zementwerkstoff, umfassend Zement und recovered Carbon Black (rCB), wobei der rCB ein bei einer Temperatur von 1000 bis 3000°C thermisch nachbehandelter rCB ist.

Das erfindungsgemäße zementbasierte Bauteil ist insbesondere elektrisch leitfähig und eignet sich für eine Vielzahl von Anwendungen, bei denen die elektrische Leitfähigkeit des Bauteils ausgenutzt wird.

**EP 4 635 925 A1**

(52) Gemeinsame Patentklassifikation (CPC): (Forts.)

C-Sets
**C04B 20/023, C04B 14/022;**
**C04B 28/02, C04B 14/022**

**Beschreibung**

Gebiet der Erfindung

Die Erfindung betrifft ein Bauteil aus einem Zementwerkstoff, der thermisch nachbehandeltes recovered Carbon Black (rCB) enthält, die Verwendung des Bauteils und ein Verfahren zur Herstellung des thermisch nachbehandelten rCB.

Stand der Technik

Elektrisch leitfähige Materialien auf Zementbasis weisen eine Reihe von nützlichen Anwendungsgebieten auf. Sie eignen sich z.B. für die elektrische Erdung, den Blitzschutz, als Widerstandsheizung, die Ableitung statischer Ladungen, die Abschirmung elektromagnetischer Störungen (EMI), als kathodischer Kathodenschutz, und zur Energieerzeugung und Energiespeicherung.

Der übliche Ansatz zur Herstellung von elektrisch leitfähigen Zementbauteilen ist die Einbringung von kohlenstoffhaltige Nanomaterialien und/oder leitfähige Fasern in zementhaltige Matrizen, die ein zusammenhängendes (leitfähiges) Netzwerk zwischen der porösen Struktur der zementhaltigen Materialien bilden können. In der Regel handelt es sich um Industrieruße, insbesondere Standardruße, die aufgrund ihres graphitischen Schichtaufbaus elektrisch leitfähig sind.

US 2019/0218144 A1 beschreibt z.B. ein Zementkomposit, dem durch Aufnahme von Industrierußen elektrische Leitfähigkeit verliehen wird.

Die Herstellung von Industrierußen benötigt aber fossile Rohstoffe. Als nachhaltige Alternative für Industrieruße wird daher seit einiger Zeit unter anderem der Einsatz von "recovered Carbon Black" (rCB) diskutiert. Recovered Carbon Black geht auf Recyclingprozesse von Elastomerartikeln zurück und nach anderen Verfahren hergestellt als die üblichen Industrieruße bzw. Standardruße.

Im Vergleich zu Industrierußen weisen rCBs veränderte Oberflächeneigenschaften aufgrund der Anwesenheit vieler funktioneller Gruppen und amorpher kohlenstoffhaltiger Rückstände auf. Handelsübliche rCB enthalten in der Regel produktionsbedingt Verunreinigungen, die z.B. 2 bis 25 Gew.-%, häufig 5 bis 10 Gew.-%, des Gesamtgewichts des rCB ausmachen können. Die Verunreinigungen sind kein Ruß. Die Verunreinigungen sind gewöhnlich anorganisches Material, z.B. Zinkverbindungen, Siliziumdioxid und/oder Silikate. Diese Verunreinigung geht zurück auf Additive, die in den Gummiabfällen, insbesondere Altreifen, enthalten sind. Die Menge an Verunreinigung in einem rCB kann auf einfache Weise analytisch, z. B. durch Thermogravimetrie, bestimmt werden.

Die veränderten Oberflächeneigenschaften und Verunreinigungen führen dazu, dass rCB nur eine geringe elektrische Leitfähigkeit besitzt, während die physikalischen/mechanischen Verstärkungseffekte von rCBs durchaus mit denen von Industrieruß vergleichbar sind. Bei technischen Anwendungen, bei denen es nicht auf die elektrischen Eigenschaften ankommt, ist es daher möglich, Industrieruße ganz oder zumindest anteilig durch rCBs zu ersetzen.

Der Mangel an elektrischen Eigenschaften von rCB ist auf den Pyrolyseprozess bei der Herstellung zurückzuführen. Aufgrund der Verunreinigungen im Ausgangsmaterial enthält die Oberfläche des gebildeten rCB wesentlich mehr organische Gruppen und anorganische Verunreinigungen, die unter den Bedingungen des Pyrolyseprozesses die Bildung einer homogenen Graphitschicht auf der Oberfläche verhindern, die für die hohe elektrische Leitfähigkeit von Industrieruß verantwortlich ist.

Wenn die elektrischen Eigenschaften von Industrieruß, insbesondere die hohe elektrische Leitfähigkeit, von wesentlicher Bedeutung sind, ist eine Substitution durch rCBs daher nur eingeschränkt oder gar nicht möglich. Die veränderten Eigenschaften von rCBs und insbesondere deren erniedrigte elektrische Leitfähigkeit im Vergleich zu Industrierußen sind daher ein Problem, das die Anwendungsmöglichkeiten für rCB einschränkt.

Der Einsatz von rCB in Zementwerkstoffen, wie z.B. Mörtel oder Beton oder aggregatfreien Zementwerkstoffen, ist Gegenstand von Forschungen. Beispielsweise untersucht Dehghanpour et al. "Evaluation of recycled nano carbon black and waste erosion wires in electrically conductive concretes", Construction and Building Materials 221 (2029) 109-121, den Einsatz von rCB in elektrisch leitfähigem Beton. Dabei wurde festgestellt, dass rCB keinen signifikanten Einfluss auf die elektrische Leitfähigkeit besitzt und nur mit rCBs gefüllte Werkstoffe eine geringe elektrische Leitfähigkeit aufweisen.

C. Roy et al., "Heat-treatment of carbon blacks obtained by pyrolysis of used tires. Effect on the surface chemistry, porosity and electrical conductivity", Journal of Analytical and Applied Pyrolysis, Band 67(1), Seiten 55 bis 76, 2003, untersucht die Auswirkungen auf die Oberflächeneigenschaften, Porosität und elektrische Leitfähigkeit von rCBs durch eine thermische Nachbehandlung. In diesem Zusammenhang wurden verschiedene Drücke und Temperaturen im Bereich von 490 bis 870 °C für die thermische Nachbehandlung von rCB getestet.

Ein Nachteil, der sich aus dem Stand der Technik ergibt, ist, dass es bisher nicht gelungen ist, rCBs mit einer sehr hohen elektrischen Leitfähigkeit bereitzustellen. Insbesondere ist es bisher nicht möglich, rCBs zu Verfügung zu stellen, die eine ausreichend hohe Leitfähigkeit aufweisen, um damit elektrisch leitfähige Bauteile aus Zementwerkstoffen herzustellen.

Beschreibung der Erfindung

Vor diesem Hintergrund bestand die Aufgabe der Erfindung in der Bereitstellung von elektrisch leitfähigen Bauteilen aus einem Zementwerkstoff, deren elektrische Leitfähigkeit durch nachhaltige Rußtypen erreicht wird. Eine weitere Aufgabe der Erfindung war die Bereitstellung eines Verfahrens zur Herstellung von nachhaltigen Rußtypen mit einer hohen elektrischen Leitfähigkeit, z.B. mit einer elektrischen Leitfähigkeit von mehr als 2,5 S/cm, die für die Herstellung von elektrisch leitfähigen Bauteilen aus Zementwerkstoffen geeignet ist.

Überraschenderweise haben die Erfinder festgestellt, dass diese Aufgabe durch die Aufnahme von in einem Temperaturbereich von 1000 bis 3000°C thermisch nachbehandeltem rCB in einen Zementwerkstoff gelöst werden konnte.

Die Erfindung betrifft somit ein Bauteil aus einem Zementwerkstoff, umfassend Zement und recovered Carbon Black (rCB), wobei der rCB ein bei einer Temperatur von 1000 bis 3000°C thermisch nachbehandelter rCB ist.

Somit ist es möglich, Bauteile aus einem Zementwerkstoff bereitzustellen, die elektrisch leitfähig sind und denen die Leitfähigkeit durch ein aus einem Recyclingprozess gewonnenes nachhaltiges Material verliehen wird.

Da in den elektrisch leitfähigen Bauteilen aus einem Zementwerkstoff der herkömmliche Industrieruß teilweise oder vollständig durch thermisch nachbehandeltes rCB ersetzt werden kann, sind diese Bauteile nachhaltiger, was unter Umweltgesichtspunkten von besonderer Bedeutung ist.

Die Erfindung betrifft ferner ein Verfahren zur Herstellung von thermisch nachbehandeltem recovered Carbon Black (rCB), umfassend die thermische Behandlung von rCB bei einer Temperatur im Bereich von 1000 bis 3000 °C.

Die Untersuchungen haben gezeigt, dass das erfindungsgemäße Verfahren zu einer starken Erhöhung der elektrischen Leitfähigkeit der erfindungsgemäß behandelten rCBs führt. Ohne an eine bestimmte Theorie gebunden zu sein, wird davon ausgegangen, dass die erfindungsgemäße thermische Nachbehandlung bei diesen hohen Temperaturen zu einer signifikanten Graphitisierung der Oberfläche des rCBs führt, wodurch die elektrische Leitfähigkeit von rCB deutlich gesteigert werden kann.

Die durch das erfindungsgemäße Verfahren erhältlichen rCB sind somit auch für technische Zementanwendungen mit hohen Leitfähigkeitsanforderungen nutzbar.

Dies war in der Vergangenheit nicht möglich und stellt einen wesentlichen Vorteil der Erfindung dar.

Die Erfindung wird nachstehend im Einzelnen beschrieben.

Das erfindungsgemäße Bauteil ist aus einem Zementwerkstoff, der Zement und recovered Carbon Black (rCB) umfasst, wobei der rCB ein bei einer Temperatur von 1000 bis 3000°C thermisch nachbehandelter rCB ist.

Recovered Carbon Black (rCB), der in Deutschland auch als Reifenpyrolyseruß oder Pyrolyseruß bezeichnet wird, ist ein rückgewonnener Ruß. Das Recyclingprodukt rCB wird dabei in der Regel aus Gummiabfällen, insbesondere Altreifen, üblicherweise über Pyrolyseverfahren gewonnen und ist kommerziell erhältlich. Eine Standardterminologie in Bezug auf recovered Carbon Black (rCB) findet sich in der ASTM D8178:2022, auf die Bezug genommen wird.

Recovered Carbon Black wird aus einem Rückgewinnungsprozess erhalten und unterscheidet sich von sogenannten erneuerbaren Füllstoffen bzw. Rußen ("renewable Carbon Black"), die aus biobasierten, nachwachsenden Rohstoffen, wie Holz, gewonnen werden.

Der rCB, der in dem erfindungsgemäßen Bauteil aus Zementwerkstoff enthalten ist, ist ein bei einer Temperatur von 1000 bis 3000°C thermisch nachbehandelter rCB. rCB an sich weist eine geringe elektrische Leitfähigkeit aus und kann keine elektrische Leitfähigkeit verleihen. Durch die thermische Nachbehandlung wird die elektrische Leitfähigkeit von rCB aber deutlich erhöht, wodurch der derart thermisch nachbehandelte rCB als Leitfähigkeitsadditiv für Zementwerkstoffe nutzbar ist. Da der thermisch nachbehandelte rCB eine sehr hohe elektrische Leitfähigkeit aufweist, sind die erfindungsgemäßen Bauteile für Anwendungen als elektrisch leitfähige Bauteile aus Zementwerkstoffen geeignet.

Der in dem erfindungsgemäßen Bauteil aus Zementwerkstoff enthaltene thermisch nachbehandelte rCB kann eine außerordentlich hohe elektrische Leitfähigkeit aufweisen. Vorzugsweise weist der thermisch nachbehandelte rCB eine elektrische Leitfähigkeit von mehr als 2,5 S/cm, bevorzugter von mehr als 2,6 S/cm, auf.

Die elektrische Leitfähigkeit des thermisch nachbehandelten rCB kann anhand des folgenden Messprotokolls ermittelt werden, welches der oben zitierten Veröffentlichung von C. Roy et al. entnommen wurde.

Die elektrische Leitfähigkeit wurde bei Raumtemperatur durch impedanzspektroskopische Messungen im Frequenzbereich von 10 bis 200 Hz bei einer Spannung von 1 V mit einem computergesteuerten Impedanz-/Verstärkungs-Phasenanalysator SI 1260 der Firma Solartron (Farnborough, Hampshire, UK) bestimmt. Eine Probe von etwa 2 g thermisch nachbehandelten rCB, die über Nacht bei 100 °C getrocknet wurde, wurde in einem hohlen Glaszylinder mit einem Innendurchmesser von 11 mm zwischen zwei Metallkolben mit einem Druck von 0,009 bis 1,7 MPa komprimiert. Diese Drücke wurden durch Auflegen von Metallteilen unterschiedlicher Masse auf den oberen Kolben erreicht. Die sehr geringen Änderungen der Probenhöhe wurden mit einem Kathethometer der Firma Gaertner Scientific Corporation (Chicago, IL, USA) gemessen. Die elektrische Leitfähigkeit ($\sigma$) wird durch folgenden Zusammenhang ermittelt:

$$\sigma = \frac{l}{RA}$$

Wobei *l* die Änderungen der Probenhöhe, R der Widerstand in Ohm und A die Oberfläche des Kolbens ist.

Bevorzugt handelt es sich bei dem bei einer Temperatur von 1000 bis 3000°C thermisch behandelten rCB um thermisch nachbehandelten rCB, der durch das nachstehend beschriebene erfindungsgemäße Verfahren erhältlich ist.

Der Ausdruck Bauteil wird dabei im weiten Sinn verstanden und umfasst beispielsweise auch Bodenbeläge, Straßenbeläge, Wandbeläge, Beläge auf Bauteilen oder Vorrichtungen usw. Das erfindungsgemäße Bauteil aus Zementwerkstoff ist insbesondere ein elektrisch leitfähiges Bauteil.

Das erfindungsgemäße Bauteil aus Zementwerkstoff weist vorzugsweise einen spezifischen elektrischen Widerstand von weniger als 10000 Ohmmeter, bevorzugt weniger als 1000 Ohmmeter, auf. Das erfindungsgemäße Bauteil kann sogar einen spezifischen elektrischen Widerstand von weniger als 300 Ohmmeter aufweisen.

Der spezifische elektrische Widerstand des Bauteils kann gemäß dem folgenden in US 2019/0218144 A1 beschriebenen Messverfahren bestimmt werden.

Der spezifische elektrische Widerstand ρ wird an Bauteilproben mit zylindrischer Form gemessen: typischer Durchmesser 2r=22,5 mm und Dicke e=10 mm. Die Proben werden zwischen zwei Kupferelektroden angeordnet, die an einen hochpräzisen Potentiostaten (Solartron SI1287) angeschlossen sind. Dies ermöglicht die Anlegung einer abfallenden Spannungsrampe von 10 V bis 0 V, während der durch die Probe fließende Strom aufgezeichnet wird. Das Spannungs-/Stromverhältnis wird als ungefähr konstant gemessen und gemittelt, um den Probenwiderstand R zu bestimmen, aus der mit der folgenden Gleichung der spezifische elektrische Widerstand ρ der Probe bestimmt wird: ρ=Rxπr²/e.

Die Menge an rCB kann in Abhängigkeit von der Art des Zementwerkstoffs und der gewünschten elektrischen Leitfähigkeit des Bauteils eingestellt werden. In einer bevorzugten Ausführungsform beträgt die Menge an thermisch nachbehandeltem rCB in dem Zementwerkwerkstoff 0,2 bis 20 Gew.-%, bevorzugt 1 bis 15 Gew.-%, bevorzugter 2 bis 10 Gew.-%, bezogen auf das Trockengewicht des Zements.

Der Zementwerkstoff des erfindungsgemäßen Bauteils umfasst Zement. Bei dem Zement kann es sich um eine übliche Zementart handeln. Beispiele sind Portlandzement, Portlandkompositzement, Hochofenzement, Puzzolanzement und Kompositzement. Diese Aufteilung der Zementsorten wird in der DIN EN 197-1 beschrieben. In einer bevorzugten Ausführungsform ist oder umfasst der Zement Portlandzement.

Der Zementwerkstoff kann Aggregate enthalten oder frei von Aggregaten sein. Aggregate werden auch als Gesteinskörnung bezeichnet. Als Aggregate werden z.B. Sand und/oder Kies eingesetzt. Als Mörtel wird allgemein ein Zementwerkstoff bezeichnet, der Aggregate, in der Regel Sand oder Sand und Kies, mit einer Korngröße von nicht mehr als 4 mm enthält. Als Beton wird allgemein ein Zementwerkstoff bezeichnet, der auch Aggregate, in der Regel Sand und Kies, mit einer Korngröße von mehr als 4 mm enthält. Zementwerkstoffe, die keine Aggregate enthalten, bilden Bauteile aus Zementstein. Der Zementwerkstoff ist bevorzugt ein Beton, ein Mörtel oder ein aggregatfreier Zementwerkstoff.

In einer bevorzugten Ausführungsform umfasst der Zementwerkstoff ein Dispergiermittel. Das Dispergiermittel kann die Dispergierung von rCB in Wasser unterstützen. Ein geeignetes Dispergiermittel ist z.B. Carboxymethylcellulose. Der Anteil an Dispergiermittel in dem Zementwerkwerkstoff kann z.B. 0,1 bis 1 Gew.-%, bezogen auf das Trockengewicht des Zementwerkstoffs, betragen.

Der Zementwerkstoff kann ferner gegebenenfalls ein oder mehrere herkömmliche Zusatzmittel und/oder Zusatzstoffe enthalten. Beispiele sind Verflüssiger, Fließmittel, Stabilisatoren, Luftporenbildner, Erstarrungsbeschleuniger, Pigmente und Gesteinsmehle. Solche Zusatzmittel und/oder Zusatzstoffe sind auf dem Gebiet der Zementanwendungen bekannt.

Der Anteil an Zement im Zementwerkstoff kann in breiten Bereichen variieren. Der Anteil des Zements kann z.B. 5 Gew.-% bis 99 Gew.-%, bevorzugt 10 bis 95 Gew.-%, bezogen auf das Trockengewicht des Zementwerkstoffs, betragen. Im Fall von Mörtel oder Beton liegt das Verhältnis von Aggregat zu Zement üblicherweise im Bereich von 3:1 bis 5:1, in der Regel etwa 4:1. In solchen Fällen kann der Anteil des Zements z.B. 10 Gew.-% bis 30 Gew.-%, bevorzugt 15 bis 35 Gew.-%, bezogen auf das Trockengewicht des Zementwerkstoffs, betragen. Bei aggregatfreien Zementwerkstoffen kann der Anteil des Zements kann z.B. 60 Gew.-% bis 99 Gew.-%, bevorzugt 70 bis 95 Gew.-%, bezogen auf das Trockengewicht des Zementwerkstoffs, betragen.

Das erfindungsgemäße Bauteil wird durch die üblichen Verfahren zur Herstellung von zementbasierten Bauteilen gebildet. Im Allgemeinen wird das erfindungsgemäße Bauteil durch Vermischen des Zementwerkstoffs mit Wasser unter Bildung eines Zementbreis, Platzieren oder Formen des Zementbreis und Aushärten des platzierten oder geformten Zementbreis gebildet. Das Verhältnis zwischen der Masse des eingesetzten Wassers und der Masse des Zements (Wasserzementwert) kann in den üblichen Bereichen liegen, z.B. im Bereich von 0,2 bis 0,8 bzw. 0,4 bis 0,8.

Der rCB kann vor der Wasserzugabe dem Zementwerkstoff zugemischt werden. In diesem Fall wird er in der Regel in trockener Form zugesetzt. Alternativ kann der rCB als Dispersion in Wasser zugegeben werden. Die Wasser ist dabei in der Regel das Wasser, das zur Bildung des Zementbreis zum Zementwerkstoff zugemischt wird oder ein Teil davon. Die den rCB enthaltende Dispersion enthält bevorzugt das vorstehend genannte Dispergiermittel, um die Dispergierung des rCB zu unterstützen.

Der Zementbrei kann z.B. auf einen Untergrund, eine Wand, ein Bauteil oder eine Vorrichtung platziert werden. Nach der Aushärtung kann das Bauteil in Form eines Bodenbelags, eines Straßenbelags, eines Gehwegs, eines Wandbelags, einer Beschichtung oder eines Teils davon vorliegen. Der Zementbrei kann auch zur Formung in einer Form gebracht werden, um nach Härtung ein eigenständiges Bauteil oder ein in eine übergeordnete Struktur integriertes Bauteil zu bilden.

Das erfindungsgemäße Bauteil kann z.B. ein Sensor, ein beheizbarer Boden, ein EMV-Abschirmmaterial, ein Energiespeicher, ein Superkondensator, ein Energieüberträger, ein leitfähiges Leitelement, z.B. als leitfähiges Kabel, leitfähiger Draht oder leitfähige Bahn, oder ein kathodischer Korrosionsschutz oder eine Komponente davon sein.

Die Erfindung betrifft auch die Verwendung eines erfindungsgemäßen Bauteils aus Zementwerkstoff wie vorstehend beschrieben als elektrisch leitfähiges Bauteil. Die Erfindung betrifft insbesondere die Verwendung eines erfindungsgemäßen Bauteils als Sensor, zur Beheizung, zur elektromagnetischen Abschirmung von Bauteilen, als Energiespeicher, für einen Superkondensator, zur elektrischen Ableitung, zur Energiebereitstellung, insbesondere mittels Induktion, als leitfähiges Leitelement, z.B. als leitfähiges Kabel, als leitfähiger Draht oder als leitfähige Bahn, als kathodischer Korrosionsschutz oder als Schutz von Beton vor Schädigung durch Frost-Tau-Wechselbelastung und/oder Alkali-Kieselsäure-Reaktion.

Sensorische Anwendungen sind z.B. die Verwendung des Bauteils zur Detektion von Mikrorissen, z.B. in einem Beton-Bauteil ("Self-sensing").

Die Verwendung des Bauteils, z.B. in Form eines Bodenbelags, zur Beheizung kann z.B. zur Beheizung von Gehwegen, als Fußbodenheizung oder zur Aushärtung des Zements bei kalten Temperaturen durch Beheizung ("Selfheating") genutzt werden. Dabei macht man sich den Joule-Effekt zunutze, indem an das Bauteil ein elektrischer Strom angelegt wird, wodurch das elektrisch leitfähige Bauteil sich erwärmt (Widerstandsheizung).

Die Verwendung des Bauteils zur elektromagnetischen Abschirmung von Bauteilen kann für EMV-Anwendungen dienen. EMV steht als Abkürzung für elektromagnetische Verträglichkeit und bezeichnet die Fähigkeit eines EMV-Abschirmmaterials, Vorrichtungen oder Geräte vor ungewollten elektrischen oder elektromagnetischen Effekten zu schützen.

Die Verwendung des Bauteils zur Energiespeicherung bzw. für einen Superkondensator kann z.B. zur Energiespeicherung in Häusern, bei Windturbinen, an Gezeitenkraftwerken genutzt werden. Erfindungsgemäße Bauteile können dabei z.B. als Kondensatoren in einem Superkondensator eingesetzt werden. Superkondensatoren ermöglichen es, elektrische Energie vergleichsweise lange zu speichern.

Die erfindungsgemäßen Bauteile, z.B. in Form eines Fußbodens, können eine elektrische Ableitung gewährleisten, z.B. als elektrische Erdung, Blitzschutz, oder zur Ableitung statischer Ladungen.

Die Verwendung des Bauteils zur Energiebereitstellung kann z.B. zur Aufladung von Elektroautos über den durch das Bauteil gebildeten Untergrund mittels Induktion genutzt werden.

Die Erfindung betrifft ferner ein Verfahren zur Herstellung von thermisch nachbehandeltem recovered Carbon Black (rCB), umfassend die thermische Behandlung von rCB bei einer Temperatur im Bereich von 1000 bis 3000 °C.

Durch das erfindungsgemäße Verfahren wird ein thermisch nachbehandelter recovered Carbon Black (rCB) hergestellt. Als Ausgangsmaterial wird dabei rCB verwendet, welches bereits hergestellt worden ist. Die thermische Nachbehandlung kann grundsätzlich mit jedem kommerziell erhältlichen rCB erfolgen. Da die Herstellung von rCB üblicherweise ein Pyrolyseverfahren umfasst, wird das nach dem erfindungsgemäßen Verfahren hergestellte Produkt als thermisch nachbehandeltes recovered Carbon Black (rCB) bezeichnet.

Das erfindungsgemäße Verfahren umfasst die thermische Behandlung von rCB bei einer Temperatur im Bereich von 1000 bis 3000 °C. Vorzugsweise wird die thermische Behandlung von rCB bei einer Temperatur im Bereich von 1000 bis 1500 °C, besonders bevorzugt bei einer Temperatur im Bereich von 1000 bis 1200 °C, durchgeführt. Unterhalb dieses Temperaturbereichs kann keine ausreichende Graphitisierung des rCBs erreicht werden, die für hohe Leitfähigkeitsanforderungen notwendig sind.

Die thermische Behandlung des rCbs erfolgt gewöhnlich in einem Ofen. Der Ofen weist dabei bevorzugt eine während der thermischen Behandlung abgeschlossene Kammer, auch als Reaktionsraum bezeichnet, auf, in der der rCB eingebracht wird.

Vorzugsweise handelt es sich bei dem Ofen um einen Pyrolysereaktor, einen Muffelofen oder einen Rohrofen.

Das erfindungsgemäße Verfahren ist insbesondere ein Pyrolyseverfahren, d.h. die thermische Behandlung des rCB erfolgt weitgehend oder vollständig unter Ausschluss von Sauerstoff. Der rCB wird somit insbesondere einer Pyrolyse unterworfen.

Die thermische Behandlung erfolgt daher in der Regel unter Inertgas, wobei das Inertgas bevorzugt Stickstoff ist. Die thermische Behandlung erfolgt vorzugsweise unter einer Stickstoffatmosphäre. Eine Beaufschlagung des rCBs mit Inertgas, wie z.B. Stickstoff, vor dem Beginn der thermischen Behandlung bzw. vor Einbringung des rCB in den Ofen kann zusätzlich vorteilhaft sein.

Die thermische Behandlung kann eine Aufheizperiode umfassen oder bei einer konstanten Temperatur erfolgen.

Bei einer thermischen Behandlung bei konstanter Temperatur wird der Ofen auf die gewünschte Temperatur für die thermische Behandlung wie vorstehend spezifiziert gebracht (Zieltemperatur) und anschließend wird das zu behandelnde rCB in den Ofen eingebracht.

Alternativ umfasst die thermische Behandlung eine Aufheizperiode bei der der rCB in den Ofen eingebracht wird, der eine Temperatur unterhalb der Zieltemperatur aufweist, z.B. Umgebungstemperatur. Bei der anschließenden Aufheizperiode wird der Ofen mit dem darin enthaltenen rCB auf die Zieltemperatur aufgeheizt. Die Aufheizung kann graduell oder stufenweise erfolgen. Die Aufheizrate während der Aufheizperiode kann z.B. 2 bis 20 K/min, bevorzugt 5 bis 10 K/min, betragen.

Die Dauer der thermischen Behandlung ist grundsätzlich nicht beschränkt und kann z.B. vom Ofentyp, dem rCB-Typ und der eingesetzten Temperatur abhängen.

Vorzugsweise wird die thermische Behandlung für eine Dauer von 10 Minuten bis 5 Stunden, vorzugsweise 1 bis 2 Stunden, durchgeführt.

Die thermische Behandlung wird z.B. bei einer Temperatur im Bereich von 1000 bis 3000 °C für eine Dauer von 10 Minuten bis 5 Stunden, bevorzugt bei einer Temperatur im Bereich von 1000 bis 1500°C oder 1000 bis 1200 °C für eine Dauer von 1 bis 2 Stunden, durchgeführt.

Die Angabe der Dauer der thermischen Behandlung bezieht sich nur auf die Zeit, in der die für die thermische Nachbehandlung erforderliche Temperatur von 1000 bis 3000°C vorherrscht. Die Zeit, die während einer Aufheizperiode erforderlich ist, um die erforderliche Temperatur zu erreichen, ist in der Dauer der Wärmebehandlung nicht enthalten.

Die thermische Behandlung des rCB kann in Anwesenheit eines oder mehrerer Additive durchgeführt werden, wobei das Additiv bevorzugt ausgewählt wird aus einem Oxidationsmittel und/oder einem kohlenwasserstoffbasierten Additiv.

Das Additiv ist im Wesentlichen nicht beschränkt und dient vorwiegend dazu, die Graphitierung, welche auch als Graphitisierung bezeichnet wird, von rCB während der thermischen Behandlung zu begünstigen. Solche Additive werden auch als Graphitisierungsadditive bezeichnet. Insbesondere die als Additive eingesetzten Oxidationsmittel werden im Allgemeinen in geringen Mengen eingesetzt, so dass es sich weiterhin um eine Pyrolyse handelt.

Vorzugsweise handelt es sich bei dem Oxidationsmittel um Luft, $O_2$, $O_3$, einer sauerstoffhaltigen Säure, Wasserdampf, $CO_2$ oder Kombinationen davon. Als kohlenwasserstoffbasiertes Additiv werden vorzugsweise Erdgas, Erdöl, Acetylen oder Kombinationen davon verwendet.

Es sind auch Kombinationen aus den vorstehend genannten Additiven oder gegebenenfalls die Zugabe eines Katalysators möglich.

Die thermische Behandlung von rCB kann bevorzugt bei Atmosphärendruck erfolgen, wodurch eine einfache Verfahrensführung ermöglicht wird. Die thermische Behandlung kann aber auch bei Überdruck oder Unterdruck erfolgen.

Der durch das erfindungsgemäße Verfahren erhältliche thermisch nachbehandelte rCB weist bevorzugt eine elektrische Leitfähigkeit von größer als 2,5 S/cm, bevorzugt größer als 2,6 S/cm, auf.

Der durch das erfindungsgemäße Verfahren erhältliche thermisch nachbehandelte rCB eignet sich insbesondere als elektrisch leitfähiger Füllstoff bzw. als Leitfähigkeitsadditiv für ein Bauteil aus einem Zementwerkstoff.

**Patentansprüche**

1. Bauteil aus einem Zementwerkstoff, umfassend Zement und recovered Carbon Black (rCB), wobei der rCB ein bei einer Temperatur von 1000 bis 3000°C thermisch nachbehandelter rCB ist.

2. Bauteil nach Anspruch 1, wobei der thermisch nachbehandelte rCB eine elektrische Leitfähigkeit von größer als 2,5 S/cm, bevorzugt größer als 2,6 S/cm, aufweist.

3. Bauteil nach Anspruch 1 oder 2, wobei das Bauteil einen spezifischen elektrischen Widerstand von weniger als 10000 Ohmmeter, bevorzugt weniger als 1000 Ohmmeter, aufweist.

4. Bauteil nach einem der vorhergehenden Ansprüche, wobei die Menge an thermisch nachbehandeltem rCB 0,2 bis 20 Gew.-%, bevorzugt 1 bis 15 Gew.-%, bevorzugter 2 bis 10 Gew.-%, bezogen auf das Trockengewicht des Zements, beträgt.

5. Bauteil nach einem der vorhergehenden Ansprüche,

    wobei der Zement Portlandzement ist oder umfasst, und/oder
    wobei der Zementwerkstoff ein Dispergiermittel, bevorzugt Carboxymethylcellulose, und/oder Aggregate umfasst.

6. Bauteil nach einem der vorhergehenden Ansprüche, wobei der Zementwerkstoff ein Beton, ein Mörtel oder ein aggregatfreier Zementwerkstoff ist.

7. Bauteil nach einem der vorhergehenden Ansprüche, das durch Vermischen des Zementwerkstoffs mit Wasser unter Bildung eines Zementbreis, Platzieren oder Formen des Zementbreis und Aushärten des platzierten oder geformten Zementbreis gebildet wird, wobei der rCB in dem Zementwerkstoff vor der Wasserzugabe enthalten ist oder als Dispersion in Wasser zugegeben wird.

8.  Bauteil nach einem der vorhergehenden Ansprüche, wobei der thermisch nachbehandelte rCB durch ein Verfahren nach einem der Ansprüche 10 bis 15 erhalten wurde.

9.  Verwendung eines Bauteils nach einem der vorhergehenden Ansprüche als Sensor, zur Beheizung, zur elektromagnetischen Abschirmung von Bauteilen, als Energiespeicher, für einen Superkondensator, zur elektrischen Ableitung, zur Energiebereitstellung, insbesondere mittels Induktion, als leitfähiges Leitelement, als kathodischer Korrosionsschutz oder als Schutz von Beton vor Schädigung durch Frost-Tau-Wechselbelastung und/oder Alkali-Kieselsäure-Reaktion.

10.  Verfahren zur Herstellung von thermisch nachbehandeltem recovered Carbon Black (rCB), umfassend die thermische Behandlung von rCB bei einer Temperatur im Bereich von 1000 bis 3000 °C, bevorzugt von 1000 bis 1500 °C, bevorzugter von 1000 bis 1200 °C.

11.  Verfahren nach Anspruch 10, wobei die thermische Behandlung für eine Dauer von 10 Minuten bis 5 Stunden, vorzugsweise 1 bis 2 Stunden, durchgeführt wird.

12.  Verfahren nach Anspruch 10 oder 11, wobei die thermische Behandlung unter Inertgas, vorzugsweise unter Stickstoff, erfolgt.

13.  Verfahren nach einem der Ansprüche 10 bis 12, wobei die thermische Behandlung eine Aufheizperiode umfasst oder bei einer konstanten Temperatur erfolgt.

14.  Verfahren nach einem der Ansprüche 10 bis 13, wobei die thermische Behandlung des rCB in Anwesenheit eines oder mehrerer Additive durchgeführt wird, wobei das Additiv bevorzugt ausgewählt wird aus einem Oxidationsmittel und/oder einem kohlenwasserstoffbasierten Additiv.

15.  Verfahren nach einem der Ansprüche 10 bis 14, wobei die thermische Behandlung in einem Pyrolysereaktor, einem Muffelofen oder einem Rohrofen erfolgt.

Europäisches
Patentamt

European
Patent Office

Office européen
des brevets

# EUROPÄISCHER RECHERCHENBERICHT

**Nummer der Anmeldung**

EP 25 16 7320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2001 226520 A (YOKOHAMA RUBBER CO LTD) 21. August 2001 (2001-08-21) * das ganze Dokument * ----- | 10-15 | INV. C04B20/02 C04B28/02 |
| X | ABDULFATTAH OSAYD ET AL: "Experimental evaluation of using pyrolyzed carbon black derived from waste tires as additive towards sustainable concrete", CASE STUDIES IN CONSTRUCTION MATERIALS, Bd. 16, 1. Juni 2022 (2022-06-01), Seite e00938, XP093288732, ISSN: 2214-5095, DOI: 10.1016/j.cscm.2022.e00938 Gefunden im Internet: URL:https://pdf.sciencedirectassets.com/287527/1-s2.0-S2214509521X00034/1-s2.0-S2214509522000705/main.pdf?hash=988203a4a4d92e53f0ee6063b52ede9b7dfd82231e5b19cf2cfd3c648fc2d7df&host=68042c943591013ac2b2430a89b270f6af2c76d8dfd086a07176afe7c76c2c61&pii=S2214509522000705&tid=spdf-a58499fe-5ba3-4d5a-af3c-2fa> [gefunden am 2025-08-07] * das ganze Dokument * ----- | 1-9 | |
| X | CHOI GO BONG ET AL: "Carbon black produced by plasma in benzene solution applied as the conductive agent in lithium secondary batteries", CARBON, Bd. 205, 1. März 2023 (2023-03-01), Seiten 444-453, XP093302925, GB ISSN: 0008-6223, DOI: 10.1016/j.carbon.2023.01.042 [gefunden am 2025-08-07] * das ganze Dokument * ----- | 1-9 | |

**RECHERCHIERTE SACHGEBIETE (IPC)**

C04B

-/--

Der vorliegende Recherchenbericht wurde für alle Patentansprüche erstellt

| Recherchenort | Abschlußdatum der Recherche | Prüfer |
|---|---|---|
| München | 7. August 2025 | Roesky, Rainer |

EPO FORM 1503 03.82 (P04C03)

**EUROPÄISCHER RECHERCHENBERICHT**

Europäisches
Patentamt

European
Patent Office

Office européen
des brevets

**Nummer der Anmeldung**

EP 25 16 7320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 110 482 923 A (UNIV YANSHAN) 22. November 2019 (2019-11-22) * das ganze Dokument * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. August 2025 | Roesky, Rainer |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**                    EP 25 16 7320

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2025

| Im Recherchenbericht angeführtes Patentdokument | Datum der Veröffentlichung | Mitglied(er) der Patentfamilie | Datum der Veröffentlichung |
|---|---|---|---|
| JP 2001226520 A | 21-08-2001 | KEINE | |
| CN 110482923 A | 22-11-2019 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20190218144 A1

### In der Beschreibung aufgeführte Nicht-Patentliteratur

- **DEHGHANPOUR et al.** Evaluation of recycled nano carbon black and waste erosion wires in electrically conductive concretes. *Construction and Building Materials*, 2029, vol. 221, 109-121

- **C. ROY et al.** Heat-treatment of carbon blacks obtained by pyrolysis of used tires. Effect on the surface chemistry, porosity and electrical conductivity. *Journal of Analytical and Applied Pyrolysis*, 2003, vol. 67 (1), 55-76